(19) Europäisches Patentamt
European Patent Office
Office européen des brevets

(11) EP 1 985 901 B1

## (12) EUROPÄISCHE PATENTSCHRIFT

(45) Veröffentlichungstag und Bekanntmachung des Hinweises auf die Patenterteilung:
**08.06.2011 Patentblatt 2011/23**

(51) Int Cl.:
***F16K 37/00*** *(2006.01)*

(21) Anmeldenummer: **08154871.1**

(22) Anmeldetag: **21.04.2008**

(54) **Ventil mit Zustandsanzeige**

Valve with status display

Soupape dotée d'un affichage d'état

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007019396**

(43) Veröffentlichungstag der Anmeldung:
**29.10.2008 Patentblatt 2008/44**

(73) Patentinhaber: **Klotsche, Harald**
**61273 Wehrheim (DE)**

(72) Erfinder: **Klotsche, Harald**
**61273 Wehrheim (DE)**

(74) Vertreter: **Staudt, Armin Walter**
**Patentanwalt**
**Auf der Mauer 8**
**63674 Altenstadt (DE)**

(56) Entgegenhaltungen:
**WO-A-96/38687    CA-A1- 2 216 493**
**DE-A1- 4 309 753    DE-C- 805 477**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Absperrventil mit Zustandsanzeige, mit einem um eine Drehachse drehbaren Betätigungselement, durch dessen Drehbetätigung ein hubbeweglicher Ventilkörper zwischen einer Offen- und einer Schließstellung bewegbar ist, und das mit einer Anzeigeeinrichtung zur Anzeige der Ventilkörperstellung in Wirkverbindung steht.

Stand der Technik

Hochwertige Absperrventile sind mit einer Zustandsanzeige versehen, mit der die aktuelle Betriebsstellung des Ventilkörpers optisch signalisiert wird. Bei dem Betätigungselement handelt es sich beispielsweise um eine Kurbel, einen Knebel, einen Hebel oder um ein Handrad, häufig umgeben von einer Kappe.

Auf der Oberseite des Handrades befindet sich ein Fensterausschnitt, durch den man in das Handradinnere auf einen durch Reibung oder Klemmung verdrehgehemmten Anzeigering blicken kann, auf dem farbliche Markierungen, wie etwa rot für "geschlossen" oder grün für "offen" aufgebracht sind.

In geschlossener Stellung sieht der Bediener in der Draufsicht auf das Handrad die rote Markierung für "geschlossen". Wird nun das Handrad verdreht, so ändert das Fenster im Handrad seine Position relativ zum darunter liegenden Anzeigering da diese sich wegen Klemmung nicht bewegen kann. Das Fenster fährt nun über einen Übergangsbereich zwischen der roten Markierung und der grünen Markierung, bis nur noch die grüne Markierung für "offen" zu sehen ist. Dies bleibt unverändert bis zum Erreichen der Endstellung des Handrades.

In einem Übergangsbereich wird optisch ein Zustand dargestellt, der weder eindeutig geöffnet noch eindeutig geschlossen zeigt. Die optischen Signale für beide Zustände sind in diesem Bereich gleichzeitig sichtbar.

Ist die Endstellung nach weniger als 360° Verdrehwinkel (minus Fensterbreite) erreicht, so ist die Darstellung des Öffnungszustandes eindeutig. Beim Zurückdrehen wird erst wieder der grüne Bereich durchlaufen, hiernach folgt der Übergangsbereich zu rot und wenn das Ventil geschlossen ist, kann man im Fenster ausschließlich die rote Markierung sehen.

Ist die Endstellung jedoch erst nach mehr als 360° Verdrehwinkel (abzüglich der Fensterbreite) erreicht, so wird entweder der rote Bereich erneut (oder mehrmals) durchlaufen, oder am Handrad ist ein Mitnehmer angebracht, der den Anzeigering bis zum Erreichen der Endstellung gegen die Klemm- oder Reibkraft mitschleppt, bevor die rote Markierung erneut erreicht wird.

Bei der zuerst genannten Ausgestaltung ist die Mangelhaftigkeit der Anzeige offenkundig: Trotz geöffnetem Ventil wird der rote Bereich mir dem Sinngehalt "geschlossen" durchlaufen, was zu Fehlinterpretationen führen kann und sicherheitstechnisch als gefährlich einzustufen ist.

Bei der als zweites genannten Ausgestaltung mit Schleppmechanismus für einen Anzeigering tritt die Mangelhaftigkeit bei der Anzeige des Öffnungszustandes des Ventils erst bei der Schließbewegung auf: Ein Absperrventil dieser Art ist beispielsweise aus der DE 43 09 753 A1 bekannt. Bei dem dort vorgeschlagenen Absperrventil, wie etwa einem Durchgangsventil, Eckventil oder Flaschenventil, ist ein drehbares Handrad zum Bewegen des Ventilkörpers zwischen seiner Offen- und seiner Schließstellung vorgesehen, bei dessen Drehung ein Mitnehmer in einen Mitnahmenocken des Anzeigerings eingreift, wobei dieser jedoch in der Endlage von der Bewegung des Handrades entkoppelt ist.

Bei der Schließbewegung löst sich der Mitnehmer vom Mitnahmenocken des Anzeigerings und durchläuft erst den gesamten grünen Bereich, dann den Übergangsbereich bis nach einer vollen Umdrehung am Ende des roten Bereiches wieder an den Mitnahmenocken stößt und dann den Anzeigering solange mit Signalgebung "rot" mitschleppt, bis das Ventil tatsächlich geschlossen ist. Optisch wird jedoch schon bei einer vollen Umdrehung des Handrades abzüglich der Fensterbreite der geschlossene Zustand ("rot") des Ventils angezeigt, also bereits bevor das Ventil tatsächlich geschlossen ist.

In beiden Fällen kann es zu Gefährdungen und Unfällen kommen, wenn beispielsweise ein brennbares oder giftiges Gas aus einer nicht verschlossenen Druckflasche entweichen kann.

Technische Aufgabe

Diesen Stand der Technik berücksichtigend, liegt der Erfindung die Aufgabe zugrunde, ein betriebssicheres Absperrventil mit verlässlicher und eindeutiger Zustandsanzeige zu schaffen. Außerdem soll das Absperrventil an unterschiedliche Verdrehwinkel des Betätigungselements zwischen Offen- und Schließzustand des Ventilkörpers auf einfache Art und Weise anpassbar sein, so dass es unabhängig vom Verdrehwinkel stets eine eindeutige und richtige Anzeige über die aktuelle Betriebsstellung ergibt.

Diese Aufgabe wird ausgehend von einem Absperrventil der eingangs genannten Gattung erfindungsgemäß dadurch gelöst, dass die Anzeigeeinrichtung ein Lagerelement und ein Hubelement aufweist, wobei das Lagerelement und das Hubelement derart gelagert sind, dass sie entlang der Drehachse relativ zueinander reversierend verschiebbar und um die Drehachse relativ zueinander verdrehbar sind, und dass die Wirkverbindung zwischen Betätigungselement und Anzeigeeinrichtung einen Mechanismus umfasst, bei dem durch Drehen des Betätigungselements zum Heben des Ventilkörpers eine relative Verdrehung von Lagerelement und Hubelement erfolgt und dabei ein mechanisches Abstandselement zwischen das Lagerelement und das Hubelement gelangt, welches gegen eine axial wirkende Rückstellkraft eine die Zustandsanzeige ändernde Änderung des Abstands zwischen Lagerelement und Hubelement bewirkt, und das den Abstand beim Weiterdrehen des Betätigungselements aufrecht erhält.

Beim erfindungsgemäßen Absperrventil umfasst die Anzeigeeinrichtung ein Hubelement und Lagerelement, die um eine Drehachse relativ zueinander verdrehbar und entlang der Drehachse relativ zueinander verschiebbar sind. Beim Öffnen des Ventils durch Drehen des Betätigungselements kommt es zu einer relativen Verdrehung von Hubelement und Lagerelement und gleichzeitig zu einer einmaligen relativen Verschiebung in axialer Richtung. Diese einmalige Abstandsänderung zwischen Anzeigeelement und Lagerelement bewirkt eine Änderung der Zustandsanzeige, und sie wird während der weiteren Drehbewegung des Betätigungselements (bis zum Anschlag) im Wesentlichen konstant gehalten.

Die einmalige Abstandsänderung wird erzeugt, indem durch die Drehbewegung des Betätigungselements und das relative Verdrehen von Hubelement und Lagerelement ein mechanisches Abstandselement zwischen das Lagerelement und das Anzeigeelement verbracht und damit eine Abstandsvergrößerung erzeugt wird, und zwar entgegen einer in Gegenrichtung wirkenden Rückstellkraft. Beim Weiterdrehen des Betätigungselements bis zum Erreichen der vollen Offenstellung des Ventils verbleibt das Abstandselement zwischen Anzeigeelement und Lagerelement, und gewährleistet so, dass der Abstand und damit auch die Zustandsanzeige konstant gehalten werden. Geringfügige Abstandsänderungen, die die Zustandsanzeige nicht beeinträchtigen, sind zulässig und möglich. Dieser konstante Abstand ist daher zur eindeutigen Anzeige der Arbeitsstellung des Ventilkörpers verwendbar.

Im einfachsten Fall liegt das Abstandselement unmittelbar am Hubelement und/oder am Lagerelement an; es können aber auch Zwischenelemente vorgesehen sein.

Beim Schließen des Ventils läuft der Mechanismus umgekehrt ab. Das Abstandselement verbleibt während der Schließbewegung des Betätigungselements zwischen dem Hubelement und dem Lagerelement und hält den Abstand solange aufrecht, bis das Ventil geschlossen ist. Erst das vollständige Schließen des Ventils und die damit einhergehende letzte Drehbewegung des Betätigungselements bewirkt ein Entfernen des Abstandselements aus dem Spalt zwischen Hubelement und Lagerelement und damit auch eine Abstandsänderung infolge der erwähnten Rückstellkraft.

Das erfindungsgemäße Absperrventil gewährleistet eine zuverlässige und eindeutige Anzeige der aktuellen Arbeitsstellung des Ventilkörpers. Es ist insbesondere für Gas- oder Flüssigkeitsbehälter und für Gas- oder Flüssigkeitsleitungen für nahezu jede Art von Absperrventilen geeignet, beispielsweise für Kolbenventile oder Membranventile.

Es wird eine Ausführungsform des erfindungsgemäßen Absperrventils bevorzugt, bei der das Abstandselement entweder dem Lagerelement oder dem Hubelement zugeordnet ist, wobei es durch das Drehen des Betätigungselements zum Heben des Ventilkörpers aus einer Vertiefung auf eine ringförmige Gleitfläche gelangt, auf der es sich beim Weiterdrehen des Betätigungselements bewegt.

Das Abstandselement ist Teil des Lagerelements oder des Hubelements oder es ist mit einem der genannten Elemente mittelbar oder unmittelbar verbunden. Im Geschlossenzustand des Ventils wird das Abstandselement in einer Vertiefung vollständig oder teilweise aufgenommen. Beim Öffnen des Ventils gelangt das Abstandselement infolge der relativen Verdrehung von Hubelement und Lagerelement und entgegen der wirksamen Rückstellkraft auf eine vorzugsweise ringförmige Gleitfläche. Die Gleitfläche kann unmittelbar oder mittelbar (über Zwischenelemente) dem Hubelement oder dem Lagerelement zugeordnet sein. Wesentlich ist nur, dass sich das Abstandselement beim Weiterdrehen des Betätigungselements zwischen Hubelement und Lagerelement auf der Gleitfläche bewegen kann und dabei einen vorgegebenen Abstand gewährleistet.

Die Bewegung des Abstandselements auf der Gleitfläche kann beispielsweise ein Abrollen oder ein Gleiten sein. Letzteres ist durch eine einfachere und robuste Konstruktion zu erreichen, was für die Betriebssicherheit des Ventils Vorteile hat und es erleichtert eine Ausbildung des Abstandselements als Mitnehmer, wie dies weiter unten noch näher erläutert wird. Vorteilhaft das auf der Gleitfläche aufliegende Ende des Abstandselements als Kante oder Schneide ausgebildet. Die Größe des Auflagebereichs des Abstandselements hängt von der Größe des Ventils ab. Bei Flaschenventilen sind beispielsweise Stärken der Kante oder Schneide um 2 mm geeignet. Die geringe Stärke erleichtert die Gleitbewegung des Abstandselements auf der Gleitfläche und gewährleistet eine sichere Funktion als Mitnehmer, wie sie weiter unten noch näher erläutert wird.

Vorzugsweise weist das Abstandselement in Richtung der Drehbewegung des Betätigungselements zum Heben des Ventilkörpers gesehen eine zur Drehachse geneigt verlaufende Kontaktfläche zur Wandung der Vertiefung hin auf.

Die in einem geneigten Keilwinkel zur Drehachse verlaufende Kontaktfläche erleichtert das "Herausdrehen" des Abstandselements aus seiner Vertiefung. Außerdem kann die Länge des Übergangsbereichs zwischen der Ausgangsstellung (Abstandselement in der Vertiefung; Anzeige: "Ventil geschlossen") und der Endstellung (Abstandselement auf der Gleitfläche; Anzeige: "Ventil offen") anhand der Steigung der schrägen Kontaktfläche eingestellt werden.

Je flacher der Keilwinkel ist (in Bezug auf die Ordinate zur Drehachse), um so leichter lässt sich das Abstandselements aus seiner Vertiefung "herausdrehen". Andererseits erfordert ein flacher Keilwinkel eine größere Länge der Vertiefung, was den maximal erlaubten Verdrehwinkel des Betätigungselements vermindert. Keilwinkel im Bereich zwischen 20 und 60 Grad sind bevorzugt. Dabei weist die Vertiefung vorteilhafterweise eine dem Keilwinkel entsprechende Rampe auf. Im Übrigen ist die Geometrie der Kontaktfläche und die Form der Steigung nicht wesentlich für die erfindungsgemäße Lehre. Sie kann beispielsweise linear, progressiv, degressiv oder bogenförmig verlaufen.

Je größer die durch das Abstandselement bewirkte Abstandsänderung ist, um so besser ist die Ablesbarkeit der Zustandsanzeige. Andererseits erfordert eine hoher Hub eine entsprechend tiefe Vertiefung für die Aufnahme des Abstandselements, die damit einhergehend bei einer schrägen Rampe zum "Herausdrehen" des Abstandselements auch eine entsprechend große Länge, die den maximal erlaubten Verdrehwinkel des Betätigungselements vermindert, oder einen hohen Kraftaufwand bei einem steilen Keilwinkel. Der obige Bereich hat sich als geeigneter Kompromiss erwiesen. Typischerweise bewirkt das Abstandselement eine Änderung des Abstands zwischen Lagerelement und Hubelement im Bereich zwischen 4 und 10 mm.

Die Zustandsanzeige für das Absperrventil gemäß der vorliegenden Erfindung ist auch bei Drehwinkeln von mehr als 360 °C zwischen Offen- und Geschlossenstellung eindeutig und zuverlässig. Bei der hierfür bevorzugten Modifikation des erfindungsgemäßen Absperrventils ist mindestens ein auf der Gleitfläche drehbar aufliegender Abdeckring vorgesehen, der eine Aussparung aufweist, in die das aus der Vertiefung austretende Abstandselement als Mitnehmer wirkend eingreift (wie weiter oben bereits erwähnt), wobei der Abdeckring außerdem einen ausragenden Zapfen aufweist, der nach einem vorgegebenen Drehwinkel von weniger als 360 Grad an einem Anschlag so zur Anlage kommt, dass der Abdeckring die Vertiefung überdeckt.

Der vorgegebene Drehwinkel hängt von der Position des Anschlags ab; er liegt möglichst nahe an 360 Grad, um eine möglichst große Verdrehung des Betätigungselements zuzulassen und zu umfassen. Der hierbei auf der Gleitfläche drehbar aufliegende Abdeckring erfüllt folgende Funktion: Sobald das Abstandselement infolge der Aufdrehbewegung des Betätigungselements etwa eine volle Umdrehung auf der ringförmigen Gleitfläche vollzogen hat (etwas weniger als 360 Grad), gelangt es wieder zu der in der Gleitfläche ausgebildeten Vertiefung, und es würde beim Weiterdrehen des Betätigungselements in diese abgleiten, so dass der Abstand zwischen Hubelement und Lagerelement verringert würde. Die Zustandsanzeige würde dadurch zumindest kurzzeitig "geschlossen" anzeigen, obwohl das Ventil geöffnet ist. Um dies zu vermeiden, ist der Abdeckring vorgesehen. Dieser weist eine Aussparung auf, die im "Geschlossenzustand" über der Vertiefung der Gleitfläche liegt. Diese Aussparung ist so groß, dass das beim Öffnen des Ventils aus der Vertiefung austretende Abstandselement unmittelbar in die Aussparung eingreifen kann. Das Abstandselement schiebt bei seiner Gleitbewegung über die ringförmige Gleitfläche daher den Abdeckring vor sich her. Dieser ist jedoch mit einem nach Innen oder nach Außen ragenden Zapfen versehen, der kurz vor dem ersten vollständigen Umlauf um die Gleitfläche an einem Widerlager zur Anlage kommt und dadurch die weitere Bewegung des Abdeckrings auf der Gleitfläche stoppt. In dieser Position überdeckt der Abdeckring die Vertiefung der Gleitfläche. Das sich weiterdrehende Abstandselement gleitet über die vordere Kante der Aussparung und gelangt dabei auf dessen vorzugsweise plane Oberfläche, die dem Abstandselement für die weitere Drehbewegung als Gleitfläche dient. Infolge der Stärke des Abdeckrings kommt es durch das Aufgleiten des Abstandselements auf den Abdeckring zu einer gewissen Vergrößerung des Abstandes zwischen Hubelement und Lagerelement, die aber für die Zustandsanzeige vernachlässigbar ist. Die Mindeststärke des Abdeckrings liegt im Bereich eines Zehntels bis weniger Zehntel eines Millimeters.

Beim Schließen des Ventils gelangt das Abstandselement wieder in die Aussparung des Abdeckrings, gleitet nun wieder auf der Gleitfläche und schiebt dabei den Abdeckring als Mitnehmer wirkend zurück in seine Ausgangsposition, bevor es in die Vertiefung der Gleitfläche abtaucht. Ein einzelner Abdeckring genügt somit, um eine eindeutige Zustandsanzeige bis zu einem Drehwinkel bis 720 Grad - abzüglich des Winkelsegments, das die Vertiefung einnimmt - zu gewährleisten. Für größere Drehwinkel sind mehrere Abdeckringe erforderlich. Die Anzahl n der zur Erzielung einer eindeutigen Stellungsanzeige nötigen Abdeckringe richtet sich nach dem vom Ventilprinzip her vorgegebenen maximal möglichen Drehwinkel $V_{max}$ zwischen Ausgangsstellung und Endstellung. Unter der Annahme, dass das Winkelsegment "X", das die Vertiefung einnimmt und das Winkelsegment "Y + Z" zwischen dem vorderen Ende des Anschlags und dem hinteren Ende der Vertiefung jeweils 45 Grad betragen, ergibt sich bei einem einzigen Abdeckring ein maximaler Verdrehwinkel von 675° (720° - 45°), bei zwei Abdeckringen ein maximaler Verdrehwinkel von 990° (1080° - 45° - 45°) und bei drei Abdeckringen ein maximaler Verdrehwinkel von 1305° (1440° - 45° - 45°- 45°).

Die Funktion und Konstruktion etwaiger weiterer Abdeckringe ähnelt der des ersten Abdeckrings und wird weiter unten anhand der Ausführungsbeispiele noch näher erläutert.

Es wird eine Ausführungsform des erfindungsgemäßen Absperrventils bevorzugt, bei der das Lagerelement um die Drehachse drehbar ist, und Teil des Betätigungselements oder mit diesem drehbar verbunden ist.

Das Lagerelement dient hierbei dazu, die relative Drehung zwischen Lagerelement und Hubelement zu erzeugen und es bildet außerdem ein Widerlager für das axial bewegliche, sich gegen die Rückstellkraft aufstützende Hubelement. Dabei bildet es eine Einheit mit dem Betätigungselement oder es ist mit diesem verdrehsicher verbunden, so dass die Drehung des Betätigungselements der Drehung des Lagerelements entspricht.

Im Hinblick auf eine einfache und betriebssichere Konstruktion wird ein Lagerelement bevorzugt, an dessen dem Hubelement zugewandter Seite das Abstandselement vorgesehen ist.

An der dem Hubelement zugewandten Seite des Lagerelements ist das Abstandselement entweder einstückig angeformt oder es ist als separates Teil ausgebildet und dort fixiert.

Weiterhin hat sich eine Ausführungsform des erfindungsgemäßen Absperrventils besonders bewährt, bei der das Hubelement entlang der Drehachse axial und reversierend zwischen einer Ausgangsstellung und einer Endstellung, die durch den vorgegebenen Abstand definiert ist, verschiebbar gelagert ist.

Das Hubelement dient hierbei dazu, die anzeigerelevante Abstandsänderung zwischen Lagerelement und Hubelement zu ermöglichen. Vorzugsweise ist es verdrehfest ausgebildet, ermöglicht jedoch einen reversierenden axialen Hub in Richtung der Drehachse. Im Vergleich zu einem Lagerelement, das in der Regel auch Teil des Betätigungselements ist, ist bei dem Hubelement der axiale Hub konstruktiv einfacher zu realisieren.

Vorzugsweise ist dabei die dem Lagerelement zugewandte Oberseite des Hubelements als Gleitfläche ausgebildet und mit einer Vertiefung zur Aufnahme des Abstandselements versehen.

Die Vertiefung ist im Bereich der umlaufenden Gleitfläche ausgebildet. In der Ausgangsstellung ist das Abstandselement in der Aufnahme ganz oder teilweise versenkt und die Zustandsanzeige zeigt "geschlossen". In der Endstellung ist das Abstandselement aus der Aufnahme "herausgedreht" und die Zustandsanzeige zeigt "geöffnet".

In dem Zusammenhang hat es sich als vorteilhaft erwiesen, wenn ein auf das Hubelement einwirkendes Rückstellelement vorgesehen ist, das eine Rückstellung des Hubelements in seine Ausgangsstellung bewirkt.

Das Rückstellelement bewirkt zuverlässig die Umkehrung der Abstandsvergrößerung, sobald das Abstandselement aus dem Spalt zwischen Hubelement und Lagerelement ganz oder teilweise entfernt ist. Das Rückstellelement ist ein elastisches Element mit Federwirkung, im einfachsten Fall eine Blatt- oder Spiralfeder.

In einer besonders bevorzugten Ausführungsform des erfindungsgemäßen Absperrventils umfasst das Hubelement einen Trägerring, der mindestens einen axialen Mantelflächenbereich aufweist, der mit optischen Identifizierungsmerkmalen versehen ist, welche die Arbeitsstellung des Ventilkörpers charakterisieren.

Das Hubelement ist hierbei als axial beweglicher Ring ausgebildet, an dessen Zylindermantelfläche Identifizierungsmerkmale für die Zustandsanzeige angeordnet sind. Diese sind beispielsweise als Farbringe, als Bereiche unterschiedliche Musterung oder Schraffur, als Symbole oder in Form einer Beschriftung ausgebildet.

Dabei hat es sich besonders bewährt, wenn das Betätigungselement mit einer den Trägerring seitlich umhüllenden Kappe versehen ist, die im Bereich des betreffenden axialen Mantelflächenbereichs (mit den optischen Identifizierungsmerkmalen) mindestens ein Sichtfenster aufweist, dessen Höhe diejenige des axialen Mantelflächenbereichs nicht übersteigt.

Das Sichtfenster der Kappe kann auch einfach als Aussparung ausgebildet sein. Dessen Höhe ist so klein gewählt, dass stets nur eines der (beiden) optischen Identifizierungsmerkmale erkennbar ist. Für den Fall, dass die Identifizierungsmerkmale unterschiedlich breite Mantelflächenbereiche einnehmen, ist die geringere Breite für die maximale Höhe des Sichtfensters maßgeblich. Es sind natürlich auch mehrere um die Zylindermantelfläche der Kappe verteilte Sichtfenster möglich, so dass die Zustandsanzeige von mehreren Seiten des Absperrventils aus zu erkennen ist.

Diesen Vorteil bietet auch eine alternative Ausführungsform des erfindungsgemä-ßen Absperrventils, bei der das Betätigungselement eine den Trägerring seitlich umhüllende Kappe aufweist, die in der Offenstellung des Ventilkörpers den die Offenstellung charakterisierenden Mantelflächenbereich freigibt.

Infolge der Abstandsvergrößerung zwischen Hubelement und Lagerelement beim Öffnen des Ventilkörpers gelangt das die Offenstellung charakterisierende optische Identifizierungsmerkmal außerhalb des von der Kappe abgedeckten Bereichs und ist dann unmittelbar oberhalb des oberen Randes der Kappe oder unmittelbar unterhalb des unteren Randes der Kappe sichtbar. Ergänzend dazu kann bei geschlossenem Ventilkörper auch die Geschlossenstellung durch das entsprechende Identifizierungsmerkmal auf der anderen Seite der Kappe optisch angezeigt werden.

Vorzugsweise ist die Zustandsanzeige für die Arbeitsstellung des Ventilkörpers so angeordnet, dass Sie mit Blickrichtung senkrecht zur Drehachse erkennbar ist.

Beispielsweise bei vertikal orientierten Behältern mit oben aufgeschraubter Ventilanordnung (wie etwa auf Acetylen- oder Sauerstofflaschen auf Baustellen, in Fabriken oder Krankenhäusern) und sich in Behälterachse befindlichem Handrad, ist es für das Ablesen der optischen Zustandsanzeige günstiger, wenn diese nicht in der Draufsicht auf das Handrad ablesbar ist, sondern durch Seitenansicht.

Weiterhin wird das Absperrventil vorzugsweise einer Rutschkupplung, Überschnappeinrichtung oder eine Sollbruchstelle versehen, so dass im Falle eines Versagens der Zustandsanzeige der Ventilkörper geschlossen werden kann.

Hierdurch bleibt gewährleistet, dass - auch bei Fehlfunktion des Betätigungsmechanismus - wenn beispielsweise das Abstandselements zu früh in die Vertiefung der Gleitebene eintaucht - die Ventilanordnung unter Anwendung von Handgewalt noch geschlossen werden kann.

Ausführungsbeispiel

Nachfolgend wird die Erfindung anhand von Ausführungsbeispielen und einer Zeichnung näher erläutert. In der Zeichnung zeigen

| | |
|---|---|
| **Figur 1a** | eine erste Ausführungsform eines erfindungsgemäßen Absperrventils im Geschlossenzustand in einer Seitenansicht und als Schnittdarstellung, |
| **Figur 1b** | das Ventil von Fig. 1a im Offenzustand |
| **Figur 2a** | eine zweite Ausführungsform eines erfindungsgemäßen Absperrventils mit verkürzter Kappe im Geschlossenzustand in einer Seitenansicht, teilweise im Schnitt, |
| **Figur 2b** | das Ventil von Fig. 2a im Offenzustand, |
| **Figur 3** | eine Darstellung zur Erläuterung des Bewegungsablaufs der Bestandteile der Anzeigevorrichtung bei einem einfachen Absperrventil, |
| **Figur 4** | eine schematische Darstellung einer Ausführungsform des erfindungsgemäßen Absperrventils mit Abdeckring in einer Seitenansicht und als Ausschnitt, |
| **Figuren 5a, 5b** | eine Darstellung zur Erläuterung des Bewegungsablaufs der Bestandteile der Anzeigevorrichtung bei einem Absperrventil mit einem zusätzlichen Abdeck- und Verschiebering für Verdrehwinkel von mehr als 360 Grad, und |
| **Figuren 6a, 6b, 6c** | eine Darstellung zur Erläuterung des Bewegungsablaufs der Bestandteile der Anzeigevorrichtung bei einem Absperrventil mit zwei zusätzlichen Abdeck- und Verschieberingen für Verdrehwinkel von mehr als 720 Grad. |

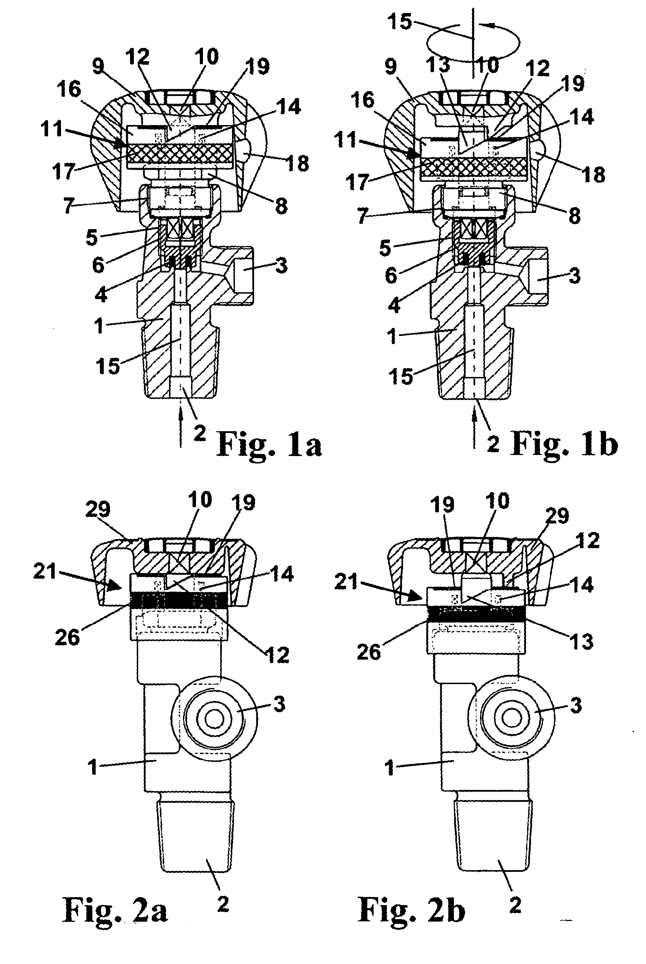

**Figuren 1a und 1b** zeigen eine erste bevorzugte Ausführungsform eines Gasabsperrventils mit Zustandsanzeige in Form eines Flaschenventils. Der Grundkörper 1 enthält zwischen einer Gaseinlassseite 2 und einer Gasauslassseite 3 einen Ventilkörper mit Dichtelement und Ventilsitz 4, ein Gewinde 5 zur Führung der Absperrspindel 6 und ein Gewinde 7 zur Befestigung der drehbaren Kopfschraube 8. Auf der Kopfschraube 8 ist über einen Vierkant 10 eine gleichzeitig als Handrad 9 ausgebildete Kappe verdrehfest verbunden.

Das Handrad 9 bildet in Verbindung mit einem Anzeigeelement 11 die Zustandsanzeige für die Arbeitsstellung der Absperrspindel 6 (Auf/Zu). Hierzu ist an der Innenoberseite des Handrads 9 als integraler Bestandteil ein nach unten ragender, keilförmiger Zapfen 12 (im Folgenden "Keil 12") ausgebildet, der im Geschlossenzustand des Ventils in einer entsprechend ausgeformten keilförmigen Vertiefung 13 (siehe Figur 1b) an der Oberseite des Anzeigeelements 11 versenkt ist. Der Keil 12 hat eine Höhe von etwa 6 mm und weist in Aufdrehrichtung des Handrades gesehen eine schräge Flanke mit einem Winkel von etwa 45 ° und in Zudrehrichtung gesehen eine steile Flanke mit einem Winkel von etwa 90 ° auf.

Das Anzeigeelement 11 ist gegen die Kraft einer Rückstellfeder 14 in Richtung der Rotationsachse 15 (entspricht der Ventil-Längsachse 15) der Kopfschraube 8 hubweise reversierend bewegbar, jedoch nicht um die Rotationsachse 15 verdrehbar. Demgegenüber kann das Handrad 9 keine Hubbewegung in Richtung der Längsachse 15 ausführen.

Der Zylindermantel des Anzeigeelements 11 ist in zwei axiale Bereiche 16, 17 unterteilt, die sich in ihrer Farbe unterscheiden. Der obere Bereich 16 ist grün markiert und symbolisiert den Offenzustand des Ventils; der untere Bereich 17 ist rot markiert und kennzeichnet den Geschlossenzustand. Die Breite des grün markierten Bereiches entspricht etwa der Keilhöhe (also 6 mm), die Breite des rot markierten Bereichs liegt bei 10 mm.

Die Kappe des Handrades 9 überragt das Anzeigeelement 11 seitlich vollständig. An der Seitenwandung sind in Höhe des Anzeigeelements 11 mehrere um den Umfang gleichmäßig verteilte Sichtfenster 18 vorgesehen, wobei die Höhe der Sichtfenster 8 etwa 6 mm beträgt und die Höhenposition so ausgelegt ist, dass durch sie hindurch jeweils nur einer der axialen Zylindermantelbereiche 16; 17 sichtbar ist. Im Geschlossenzustand des Ventils liegt nur der untere, rot markierte Bereich 17 des Anzeigeelements 11 in Höhe der Sichtfenster 18. In der in Figur 1b gezeigten Offenstellung des Ventils liegt nur der obere, grün markierte Bereich 16 des Anzeigeelements 11 in Höhe der Sichtfenster 18.

Das Handrad 9 kann eine Drehbewegung um die Längsachse 15 ausführen, jedoch keine Hubbewegung entlang dieser Achse. Das Anzeigeelement 11 hingegen kann bezüglich der Längsachse 15 nur eine Hubbewegung ausführen, jedoch keine Drehbewegung. Die Rückstellfeder 14 hält die beiden Bauteile (9, 11) durch ihre Rückstellkraft in Position zueinander.

Im Folgenden wird die Funktionsweise des erfindungsgemäßen Absperrventils anhand Figuren 1a und 1b näher erläutert:

Das Dichtelement am Fuß der Absperrspindel 6 drückt bei geschlossener Stellung des Ventils auf den Ventilsitz 4. Dabei ist der mit dem Handrad 9 verbundene Keil 12 in der angepassten Vertiefung 13 des Anzeigeelements 11 vollständig eingetaucht. Dies entspricht der in Figur 1a dargestellten Ausgangsstellung des Anzeigenhubs

Durch Drehen des Handrades 9 zum Öffnen des Ventils wird der Keil 12 aus seiner Vertiefung 13 herausgedreht und gelangt auf eine Gleitfläche auf der Oberseite des Anzeigeelements 11. Gleichzeitig wird dabei das hubbewegliche Anzeigeelement 11 in Richtung der Längsachse 15 und entgegen der auf das Anzeigeelement 11 wirkenden Kraft der Rückstellfeder 8 nach unten gedrückt. Auf diese Weise kommt es zu einer relativen axialen Verschiebung von Handrad 9 und Anzeigeelement 11 von 6 mm (entsprechend der Keilhöhe) zueinander, so dass der obere, grün markierte Zylindermantelbereich 16 des Anzeigeelements 11 in die Höhe der Sichtfenster 18 gelangt und somit "offen" anzeigt.

Dies entspricht der Endstellung der Anzeigenhubs, wie sie in Figur 1b dargestellt ist. Die Figur 1b zeigt den Bewegungsablauf zu einem Zeitpunkt, zu dem der Keil 12 gerade vollständig aus der Vertiefung 13 aufgetaucht ist. Beim weiteren Drehen des Handrades 9 in Öffnungsrichtung gleitet der Keil 12 auf der Gleitfläche 19und hält so den Abstand zwischen Anzeigeelement 11 und Handrad 9 konstant. Sofern in den Figuren 2 bis 6 dieselben Bezugsziffern wie in Figur 1 verwendet sind, so sind damit baugleiche oder äquivalente Bauteile und Bestandteile bezeichnet, wie sie oben anhand der Beschreibung der ersten Ausführungsform des erfindungsgemäßen Absperrventils näher erläutert sind.

**Figuren 2a und 2b** zeigen einer Abwandlung des Absperrventils von Figur 1, bei der das Handrad 29 mit einer verkürzten Kappe ohne Sichtfenster ausgestattet ist. Im Geschlossenzustand des Ventils überragt die Kappe des Handrades 29 das Anzeigeelement 21 seitlich vollständig, wie dies Figur 2a zeigt. In der Offenstellung des Ventils, die in Figur 2b gezeigt ist, tritt ein grün markierter Flächenbereich 26 des Anzeigeelements 11 nach unten hervor.

Im Folgenden wird der Bewegungsablauf beim Öffnen und Schließen der Ventile gemäß den Figuren 1 und 2 anhand **Figur 3** (A bis C) näher beschreiben,

Den Winkel, den der Keil 12 beim "Herausdrehen aus der Vertiefung 13" ausführt, ist im folgenden mit X bezeichnet. Der Wert beträgt X°. In seiner Ausgangsstellung ist der Keil 12 mit seiner schiefen Ebene in die Vertiefung 13 des Anzeigeelements 11 eingetaucht. Bei Verdrehung des Handrads 9 tritt zunächst der Keil aus der Vertiefung 13 des Anzeigeelements 11 heraus und verschiebt dieses um 6 mm in Richtung Rotationsachse 15 des Handrades 9. Diese Hubbewegung wird zur Anzeige der Zustandsänderung der Ventilstellung genutzt. Ein weiteres Verdrehen des Handrades 9 bewirkt keine weitere Hubbewegung des Anzeigeelements 11 mehr.

Bei weiterer Drehung um die Rotationsachse 15 gleitet die untere Kante des Keils 12 auf der Gleitfläche 19 des Anzeigeelement 11 entlang, solange bis bei einem Verdrehwinkel von 360° die Vertiefung 13 des Anzeigeelements 11 und der Keil 12 des Handrads 9 - angetrieben durch die Rückstellfeder 14 - wieder ineinander eintauchen würden und somit fälschlicherweise wieder Ausgangsstellung anzeigen würden.

Bei einem derartigen Aufbau ist die Anzeigeeinrichtung für Absperrventile geeignet, bei denen die maximal mögliche Verdrehung des Handrads 9 kleiner als 360 Grad ist, um zu jedem Zeitpunkt eine korrekte und eindeutige Anzeige des Systemzustands gewährleisten zu können.

Beim Schließen des Ventils gleitet der Keil 12 des Handrads 9 auf der Gleitfläche 19 des Anzeigeelement 11 zurück in seine Ausgangsstellung, also bis zum vollständigen Eintauchen in die Vertiefung 13 des Anzeigeelements 11. Das Eintauchen in die Vertiefung 13 bedeutet gleichzeitig, dass sich das Anzeigeelement 11 in Richtung der Rotationsachse 15 des Handrades 9 wieder zurück in seine Ausgangsstellung bewegt und dadurch optisch wiederum der Geschlossenzustand des Ventils angezeigt wird.

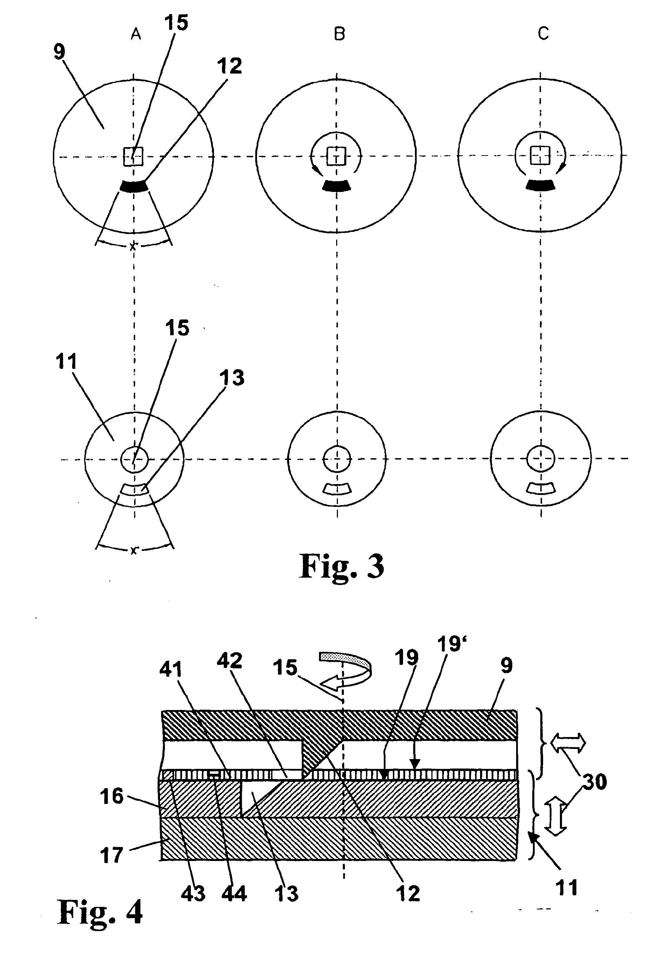

Die oben beschriebene Zustandsanzeige ist auch für Absperrventile mit größerem Verdrehwinkel als 360 Grad einsetzbar. Geeignete Ausführungsformen des Ventils werden nachfolgend anhand der Figuren 4 bis 6 näher erläutert. Dabei werden ein oder mehrere Verschiebe- und Abdeckringe 31 eingesetzt, die übereinander auf der Gleitfläche 19 des Anzeigeelements 11 aufgelegt werden, wie dies in **Figur 4** für eine Ausführungsform mit einem Abdeckring 31 schematisch dargestellt ist. Wie mit den Richtungspfeilen 30 angedeutet, können die Verschiebe- und Abdeckringe zusammen mit dem Anzeigeelement 11 eine Hubbewegung in Richtung der Rotationsachse 15 ausführen; und sie können auch eine Drehbewegung um diese Achse 15 ausführen, da sie auf dem Anzeigeelement 11 drehbar aufliegen. Die Verschiebe- und Abdeckringe weisen jeweils eine Ausklinkung 42 auf, die in der Ausgangsstellung ein Eintauchen des Keils 12 in die Vertiefung 13 des Anzeigeelements 11 zulassen, dies aber bei einer Umdrehung von 360° (oder jeweils einem Vielfachen davon) verhindern, indem sie an dieser Position die Vertiefung 13 so abdecken, dass der Keil 12 darüber hinweggleiten kann. Die im Ausführungsbeispiel gemäß Figur 1a beschriebene Gleitfläche 19 wird in diesen Fällen während der Drehbewegung des Handrades 9 zeitweise von einem (oder mehreren) auf die Oberseite 19' des Anzeigeelements 11 aufgelegten Verschiebe- und Abdeckring 31 gebildet. Figur 4 zeigt außerdem schematisch einen vom Verschiebe- und Abdeckring 41 nach außen ragenden Zapfen 43, der nach etwas weniger als einer vollen Umdrehung an einem Anschlag 44 anschlägt, der in Form einer erhöhten Außenrandes der Gleitfläche 19 am Anzeigeelement 11 ausgebildet ist. Zapfen 43 und Anschlag 44 verhindern eine volle Umdrehung des Verschiebe- und Abdeckrings 41 um 360 Grad. Im Ausführungsbeispiel entspricht die dadurch bewirkte Verdrehwinkelminderung 45 °, wobei diese Winkelverminderung dem Sektorenwinkel der Vertiefung 13 entspricht.

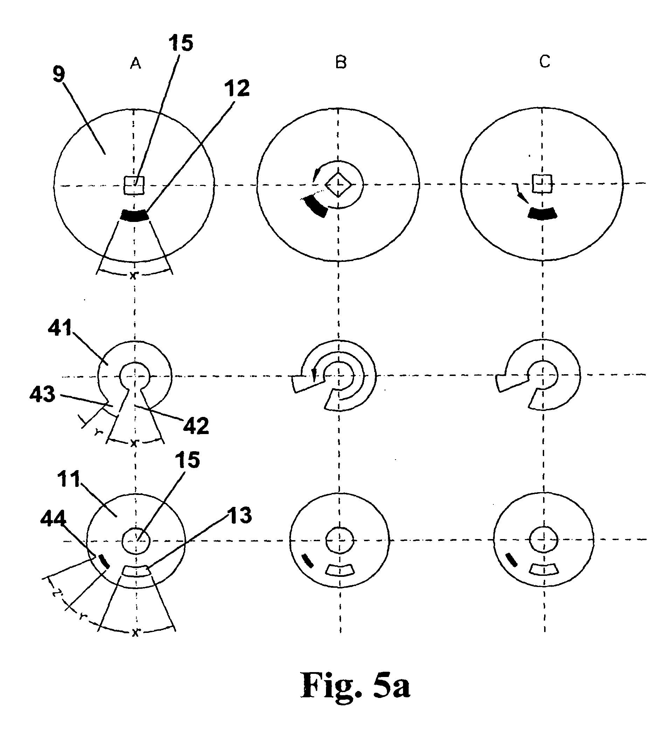

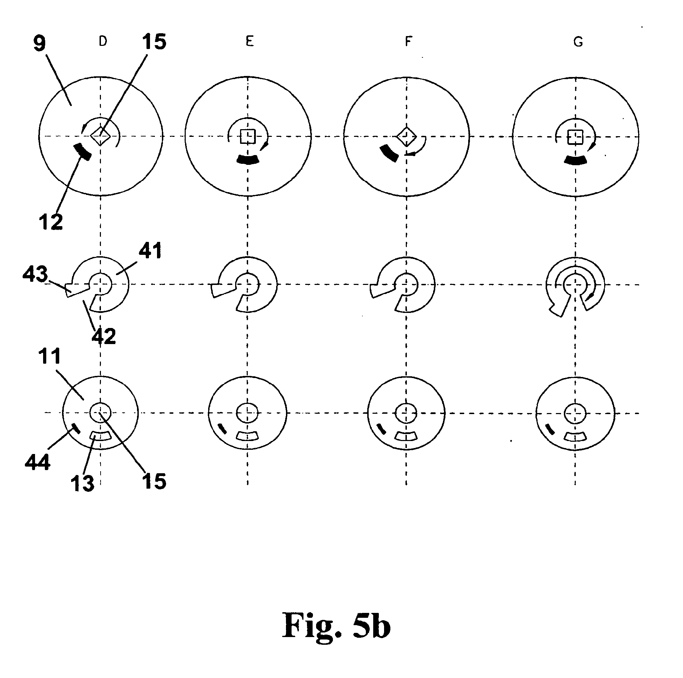

Den Bewegungsablauf der Zustandsanzeige beim Einsatz eines derartigen Verschiebe- und Abdeckrings 41 zeigt Figur 5 (A bis G)

Auf dem Anzeigeelement 11 liegt ein Verschiebe- und Abdeckring 41 mit einer Stärke von 0,5 mm auf. In Ausgangsstellung ist der Keil 12 des Handrads 9 durch eine Ausklinkung 42 des Verschiebe- und Abdeckrings 41 in die Vertiefung 13 des Anzeigeelements 11 eingetaucht.

Bei Verdrehung des Handrads 9 tritt zunächst der Keil 12 aus der Vertiefung 13 des Anzeigeelements 11 heraus und verschiebt dieses samt Verschiebe- und Abdeckring 41 in Richtung der Rotationsachse 15. Diese Hubbewegung wird zur Anzeige der Zustandsänderung des Ventils genutzt.

Beim Weiterdrehen trifft der Keil 12 auf den Rand der Ausklinkung 42 des Verschiebe- und Abdeckrings 41 und schleppt dieses (auf dem Anzeigeelement 11 entlanggleitend) vor sich her, da der Verschiebe- und Abdeckring 41 drehbar auf dem Anzeigeelement 11 aufliegt.

Bei Verdrehung des Handrads 9 um 360°-X° läuft der Verschiebe- und Abdeckring 41 mit einem nach außen ragenden Zapfen 43 gegen einen am Außenumfang des Anzeigeelements 11 vorgesehenen Anschlag 44, und kann dann durch den Keil 12 nicht weiter verdreht werden. Der Verschiebe- und Abdeckring 41 verdeckt in dieser Stellung die Vertiefung des Anzeigeelements 11.

Der Keil 12 gleitet deshalb auf den jetzt stillstehenden Verschiebe- und Abdeckring 41 auf. Dies wird durch die Hubbeweglichkeit des Anzeigeelements 11 erleichtert, das sich dabei um den Wert der Stärke des Verschiebe- und Abdeckrings 41 zusätzlich vom Handrad 9 entfernt.

Der Keil 12 gleitet daraufhin weiter entlang der planen Oberfläche des Verschiebe- und Abdeckrings 41 bis zu einem Verdrehwinkel von 720°-X° (wobei X im Ausführungsbeispiel 45 ° beträgt). Hier würde der Keil 12 des Handrads 9 erneut in die Ausklinkung 42 des Verschiebe- und Abdeckrings 41 eintauchen. Dies darf nicht passieren, so dass diese Ausführungsform der Anzeigeeinrichtung nur für solche Absperrventile geeignet sind, die eine maximal mögliche Verdrehung des Handrades 9 um einen beliebigen Winkel DELTA kleiner als 720°-X° vorsehen, damit zu jedem Zeitpunkt eine korrekte, eindeutige Anzeige des Systemzustands gewährleistet ist.

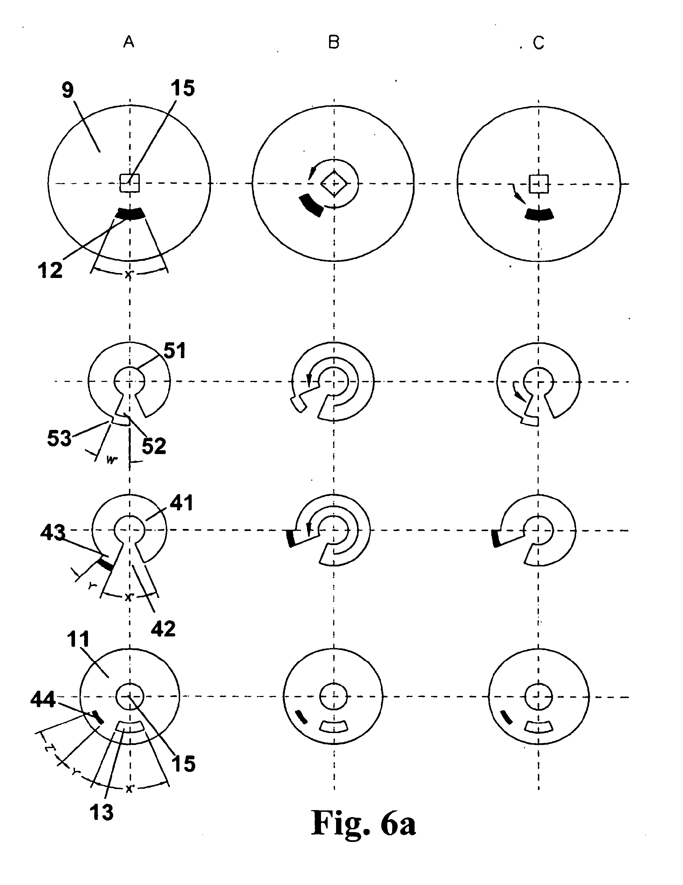

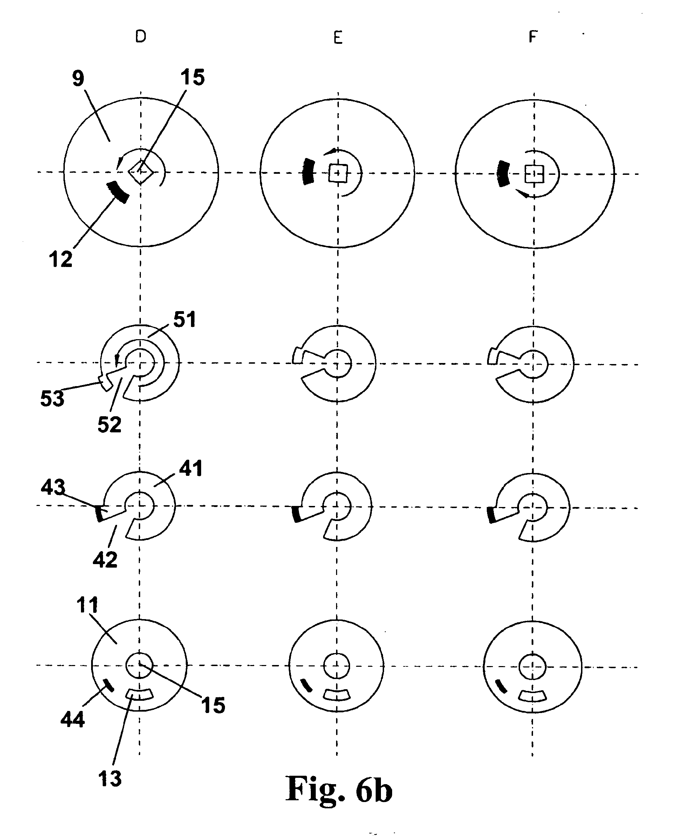

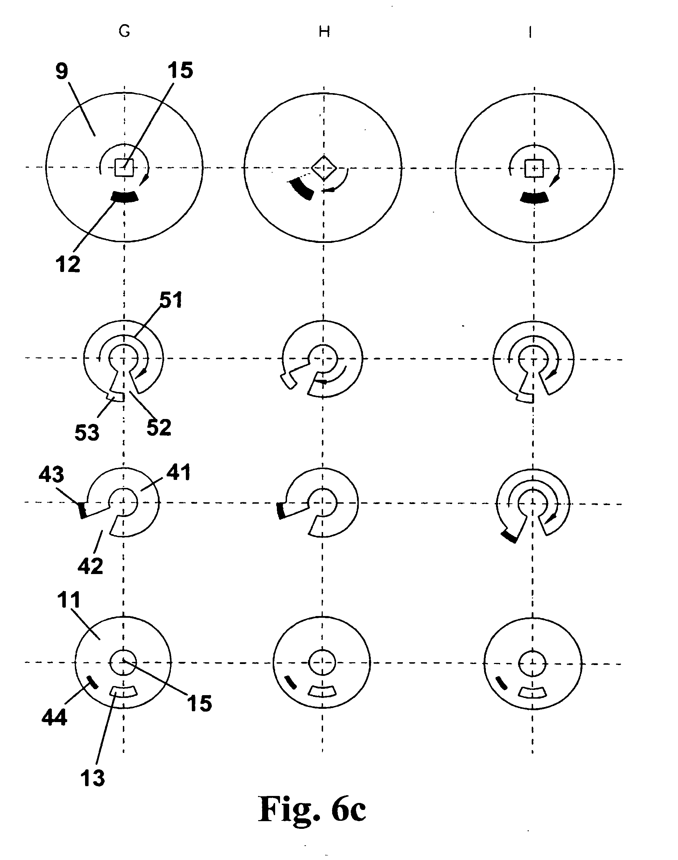

Beim Zurückdrehen des Handrades 9 zur Ausgangsstellung hin gleitet zuerst der Keil 12 auf dem Verschiebe- und Abdeckring 41 entlang bis er in die Ausklinkung 42 desselben eintaucht. Dabei hat der Keil 12 kurz zuvor die vom Verschiebe- und Abdeckring 41 noch abgedeckte Vertiefung 13 im Anzeigeelement 11 überwunden. Die Keil 12 erfasst und schleppt nun - auf der Gleitfläche des Anzeigeelements 11 entlanggleitend - den Verschiebe- und Abdeckring 41 zurück in seine Ausgangsstellung. Dort taucht der Keil 12 wieder vollständig in die Vertiefung 13 des Anzeigeelements 11 ein. Das Eintauchen in die Vertiefung 13 bedeutet gleichzeitig, dass sich das Anzeigeelement 11 in Richtung der Rotationsachse 15 des Handrades 9 wieder zurück in seine Ausgangsstellung bewegt und dadurch optisch wiederum der Ausgangszustand angezeigt wird. Der in den Figuren 5 und 6 angezeigte Segmentwinkel "Y" beschreibt ein Ringsegment, das einem Freiraum zwischen der Vertiefung 13 und dem Anschlag 43 zugeordnet ist, und der Segmentwinkel "Z" (und auch der Winkel "W" in Figur 6) charakterisiert ein Ringsegment, das dem Umfangsanteil des Anschlagelements entspricht. Die Winkelsumme von "Y + Z" beträgt im Ausführungsbeispiel ebenfalls 45 Grad und ist grundsätzlich nicht größer als "X".

Der Bewegungsablauf bei Einsatz von zwei Verschiebe- und Abdeckringen 41, 51 wird im Folgenden anhand **Figur 6** (Bewegungsschritte A bis I) beschrieben:

In Ausgangsstellung ist der Keil 12 des Handrads 9 in eine Ausklinkung 42, 52 der beiden Verschiebe- und Abdeckringe 41, 51 und in die Vertiefung des Anzeigeelements 11 eingetaucht.

Bei Verdrehung des Handrads 9 tritt zunächst die Keil 12 aus der Vertiefung 13 des Anzeigeelements 11 heraus und verschiebt dieses samt beider Verschiebe- und Abdeckringe 41, 51 in Achsrichtung (15) des Ventils. Diese Hubbewegung wird zur Anzeige der Zustandsänderung genutzt.

Der Keil 12 trifft dann auf den Rand der Ausklinkungen beider Verschiebe- und Abdeckringe 41, 51 und schleppt diese (auf dem Anzeigeelement 11 entlanggleitend) vor sich her.

Bei Verdrehung des Handrads 9 um 360°-X° läuft der untere Verschiebe- und Abdeckring 41 mit seinem Zapfen gegen einen Anschlag 44 am Anzeigeelement 11 und kann nicht weiter verdreht werden. Der untere Verschiebe- und Abdeckring 41 verdeckt in dieser Stellung die Vertiefung 13 des Anzeigeelements 11.

Die Keil 12 gleitet auf den jetzt stillstehenden unteren Verschiebe- und Abdeckring 41 auf und darauf weiter entlang bis zu einem Winkel von 720°-X°. Gleichzeitig schleppt er den oberen Verschiebe- und Abdeckring 51 bis zu einem Verdrehwinkel des Handrades von 720°-X° vor sich her. Hier läuft der obere Verschiebe- und Abdeckring 51 mit einem nach außen ragenden Zapfen 53 gegen einen Anschlag am unteren Verschiebe- und Abdeckring 41 auf. In dieser Position deckt der obere Verschiebe- und Abdeckring 51 die Ausklinkung 42 des unteren Verschiebe- und Abdeckrings 41 ab, in die ansonsten der Keil 12 eintauchen würde.

Daraufhin gleitet der Keil 12 auf den jetzt stillstehenden, oberen Verschiebe- und Abdeckring 51 auf und darauf weiter entlang bis zu einem Winkel von 1080°-2*X°. Hier würde die Keil 12 des Handrads 9 in die Ausklinkung 42 des oberen Verschiebe- und Abdeckrings 51 eintauchen.

Dies darf nicht passieren, so dass diese Ausführungsform der Anzeigeeinrichtung nur für solche Absperrventile geeignet sind, die eine maximal mögliche Verdrehung des Handrades 9 um einen beliebigen Winkel DELTA kleiner als 1080°-2*X° vorsehen, damit zu jedem Zeitpunkt eine korrekte, eindeutige Anzeige des Systemzustands gewährleistet ist.

Beim Zurückdrehen des Handrades 9 zur Ausgangsstellung hin gleitet zuerst der Keil 12 des Handrads 9 auf dem oberen Verschiebe- und Abdeckring 51 entlang bis er in dessen Ausklinkung 52 eintaucht. Nun gleitet er auf dem unteren Verschiebe- und Abdeckring 41 entlang und schleppt den oberen Verschiebe- und Abdeckring 51 mit, bis er in die Ausklinkung 42 des unteren Verschiebe- und Abdeckrings 41 eintaucht. Nun gleitet der Keil 12 auf der Gleitfläche 19 des Anzeigeelements 11 entlang (und schleppt dabei beide Verschiebe- und Abdeckringe 41, 51 mit) bis er die Ausgangsstellung erreicht und in die Vertiefung 13 des Anzeigeelements 11 eintaucht. Das Eintauchen in die Vertiefung bedeutet gleichzeitig, dass sich das Anzeigeelement 11 in Richtung der Rotationsachse 15 des Handrades 9 wieder zurück in seine Ausgangsstellung bewegt und dadurch optisch wiederum der Ausgangszustand angezeigt wird.

Der Bewegungsablauf für 3 bis n Verschiebe- und Abdeckringe ergibt sich anhand des oben detailliert erläuterten Bewegungsablaufs. Der maximal mögliche Verdrehwinkel V des Handrads 9 lässt sich nach folgender Formel ausrechnen:

$$V = (n+1)*360° - n*X° - \delta$$

wobei n eine ganze positive Zahl und δ ein kleiner positiver Winkel ist, der unter Sicherheitsgesichtspunkten eine gewisse Abnutzung von Dichtungen und sonstigen Verschleiß berücksichtigt, der sich auf den maximalen Verdrehwinkel auswirken kann.

Damit es bei Fehlfunktion des Betätigungsmechanismus mit Zustandsanzeige - hervorgerufen z.B. durch Überspringen eines Verschiebe- und Abdeckrings 41, 51 über seinen Anschlag (z.B. durch Verschmutzung) mit der Folge, dass bei der Schließbewegung des Betätigungsmechanismus die Keil 12 zu früh in die Vertiefung 13 des Anzeigeelements 11 eintaucht - nicht zu einem Blockieren des Betätigungsmechanismus kommt, und die Ventilanordnung somit nicht mehr geschlossen werden kann, ist das durch Verdrehsicherung stillstehend gehaltene Anzeigeelement 11 entweder mit einer Drehmoment-Rutschkupplung, einer Überschnappeinrichtung oder einer Sollbruchstelle versehen. Hierdurch bleibt gewährleistet, dass - auch wenn der Keil 12 in einem Zwischenzustand außerplanmäßig in die Vertiefung 13 des Anzeigeelements 11 eintaucht - die Ventilanordnung unter Anwendung von Handgewalt geschlossen werden kann.

**Patentansprüche**

1. Absperrventil mit Zustandsanzeige, mit einem um eine Drehachse (15) drehbaren Betätigungselement, durch dessen Drehbetätigung ein hubbeweglicher Ventilkörper (6) zwischen einer Offen- und einer Schließstellung bewegbar ist, und das mit einer Anzeigeeinrichtung (9, 11, 12, 16, 17, 18) zur Anzeige der Ventilkörperstellung in Wirkverbindung steht, **dadurch gekennzeichnet, dass** die Anzeigeeinrichtung (9, 11, 12, 16, 17, 18) ein Lagerelement (9) und ein Hubelement (11) aufweist, wobei das Lagerelement (9) und das Hubelement (11) derart gelagert sind, dass sie entlang der Drehachse (15) relativ zueinander reversierend verschiebbar und um die Drehachse (15) relativ zueinander verdrehbar sind, und dass die Wirkverbindung zwischen Betätigungselement und Anzeigeeinrichtung (9, 11, 12, 16, 17, 18) einen Mechanismus umfasst, bei dem durch Drehen des Betätigungselements zum Heben des Ventilkörpers (6) eine relative Verdrehung von Lagerelement (9) und Hubelement (11) erfolgt und dabei ein mechanisches Abstandselement (12) zwischen das Lagerelement (9) und das Hubelement (11) gelangt, welches gegen eine axial wirkende Rückstellkraft (14) eine die Zustandsanzeige ändernde Änderung des Abstands zwischen Lagerelement (9) und Hubelement (11) bewirkt, und das den Abstand beim Weiterdrehen des Betätigungselements aufrecht erhält.

2. Absperrventil nach Anspruch 1, **dadurch gekennzeichnet, dass** das Abstandselement (12) dem Lagerelement (9) oder dem Hubelement (11) zugeordnet ist, und dass es durch das Drehen des Betätigungselements zum Heben des Ventilkörpers (6) aus einer Vertiefung (13) auf eine ringförmige Gleitfläche (19) gelangt, auf der sich es beim Weiterdrehen des Betätigungselements bewegt.

3. Absperrventil nach Anspruch 2, **dadurch gekennzeichnet, dass** die Bewegung des Abstandselements (12) ein Gleitbewegung auf der Gleitfläche (19) ist.

4. Absperrventil nach Anspruch 2 oder 3, **dadurch gekennzeichnet, dass** das Abstandselement (12) in Richtung der Drehbewegung des Betätigungselements zum Heben des Ventilkörpers (6) gesehen eine zur Drehachse (15) geneigt verlaufende Kontaktfläche zur Wandung der Vertiefung hin aufweist.

5. Absperrventil nach einem der Ansprüche 2 bis 4, **dadurch gekennzeichnet, dass** mindestens ein auf der Gleitfläche (19) drehbar aufliegender Abdeckring (41, 51) vorgesehen ist, der eine Aussparung (42, 52) aufweist, in die das aus der Vertiefung (13) austretende Abstandselement (12) als Mitnehmer wirkend eingreift, wobei der Abdeckring (41, 51) außerdem einen ausragenden Zapfen (53, 53) aufweist, der nach einem vorgegebenen Drehwinkel von weniger als 360 Grad an einem Anschlag so zur Anlage kommt, dass der Abdeckring (41, 51) die Vertiefung (13) überdeckt.

6.  Absperrventil nach einem der vorhergehenden Ansprüche, **dadurch gekennzeichnet, dass** das Lagerelement (9) um die Drehachse (15) drehbar ist, und Teil des Betätigungselements oder mit dem Betätigungselement drehbar verbunden ist.

7.  Absperrventil nach Anspruch 1, **dadurch gekennzeichnet, dass** an der dem Hubelement (11) zugewandten Seite des Lagerelements (9) das Abstandselement (12) vorgesehen ist.

8.  Absperrventil nach einem der vorhergehenden Ansprüche, **dadurch gekennzeichnet, dass** das Hubelement (11) entlang der Drehachse (15) axial und reversierend zwischen einer Ausgangsstellung und einer Endstellung, die durch den vorgegebenen Abstand definiert ist, verschiebbar gelagert ist.

9.  Absperrventil nach einem der vorhergehenden Ansprüche, **dadurch gekennzeichnet, dass** die dem Lagerelement (9) zugewandte Oberseite des Hubelements (11) als Gleitfläche (19) ausgebildet und mit einer Vertiefung (13) zur Aufnahme des Abstandselements (12) versehen ist.

10. Absperrventil nach einem der vorhergehenden Ansprüche, **dadurch gekennzeichnet, dass** ein auf das Hubelement (11) einwirkendes Rückstellelement (14) vorgesehen ist, das eine Rückstellung des Hubelements (11) in seine Ausgangsstellung bewirkt.

11. Absperrventil nach einem der vorhergehenden Ansprüche, **dadurch gekennzeichnet, dass** das Hubelement einen Trägerring (11) umfasst, der mindestens einen axialen Mantelflächenbereich (16, 17) aufweist, der mit optischen Identifizierungsmerkmalen versehen ist, welche die Arbeitsstellung des Ventilkörpers (6) charakterisieren.

12. Absperrventil nach Anspruch 11, **dadurch gekennzeichnet, dass** das Betätigungselement mit einer den Trägerring (11) seitlich umhüllenden Kappe versehen ist, die im Bereich des axialen Mantelflächenbereichs (16, 17) mindestens ein Sichtfenster (18) aufweist, dessen Höhe diejenige des axialen Mantelflächenbereichs (16, 17) nicht übersteigt.

13. Absperrventil nach Anspruch 11, **dadurch gekennzeichnet, dass** das Betätigungselement eine den Trägerring (21) seitlich umhüllende Kappe (29) aufweist, die in der Offenstellung des Ventilkörpers (6) den die Offenstellung charakterisierenden Mantelflächenbereich (26) freigibt.

14. Absperrventil nach einem der vorhergehenden Ansprüche, **dadurch gekennzeichnet, dass** die Anzeige für die Arbeitsstellung des Ventilkörpers (6) so angeordnet ist, dass sie mit Blickrichtung senkrecht zur Drehachse (15) erkennbar ist.

15. Absperrventil nach einem der vorhergehenden Ansprüche, **dadurch gekennzeichnet, dass** eine Rutschkupplung, Überschnappeinrichtung oder eine Sollbruchstelle vorgesehen sind, so dass im Falle eines Versagens der Zustandsanzeige der Ventilkörper geschlossen werden kann.

## Claims

1.  A shut-off valve with status display, comprising an actuating element which is rotatable about a rotation axis (15) and by the rotary actuation of which a stroke-movable valve body (6) is movable between an open position and a closed position, and which is in operative communication with a display device (9, 11, 12, 16, 17, 18) for displaying the valve body position, **characterized in that** the display device (9, 11, 12, 16, 17, 18) comprises a bearing element (9) and a stroke element (11), the bearing element (9) and the stroke element (11) being supported such that they are reversingly displaceable relative to each other along the rotation axis (15) and rotatable relative to each other about the rotation axis (15), and that the operative communication between actuating element and display device (9, 11, 12, 16, 17, 18) includes a mechanism in which a relative rotation of bearing element (9) and stroke element (11) takes place by rotating the actuating element for lifting the valve body (6), and a mechanical spacer element (12) is thereby passing between the bearing element (9) and the stroke element (11), which against an axially operative resetting force (14) effects a change in the distance between bearing element (9) and stroke element (11), which change changes the status display, and which maintains the distance upon further rotation of the actuating element.

2. The shut-off valve according to claim 1, **characterized in that** the spacer element (12) is assigned to the bearing element (9) or the stroke element (11), and that it passes by rotation of the actuating element for lifting the valve body (6) from a recess (13) onto an annular slide surface (19), on which it moves upon further rotation of the actuating element.

3. The shut-off valve according to claim 2, **characterized in that** the movement of the spacer element (12) is a slide movement on the slide surface (19).

4. The shut-off valve according to claim 2 or 3, **characterized in that** the spacer element (12), viewed in the direction of the rotary movement of the actuating element for lifting the valve body (6), has a contact surface extending inclined to the rotation axis (15) towards the wall of the recess.

5. The shut-off valve according to any one of claims 2 to 4, **characterized in that** at least one cover ring (41, 51) is provided which rotatably rests on the slide surface (19) and which comprises a cavity (42, 52) into which the spacer element (12) exiting from the recess (13) operatively engages as a driver, the cover ring (41, 51) further comprising a projecting pin (43, 53) which after a predetermined rotational angle of less than 360° abuts on a stop such that the cover ring (41, 51) covers the recess (13).

6. The shut-off valve according to any one of the preceding claims, **characterized in that** the bearing element (9) is rotatable about the rotation axis (15) and is part of the actuating element or is rotatably connected to the actuating element.

7. The shut-off valve according to claim 1, **characterized in that** the spacer element (12) is provided at the side of the bearing element (9) facing the stroke element (11).

8. The shut-off valve according to any one of the preceding claims, **characterized in that** the stroke element (11) is displaceably supported axially and reversingly along the rotation axis (15) between an initial position and a final position which is defined by the predetermined distance.

9. The shut-off valve according to any one of the preceding claims, **characterized in that** the upper side of the stroke element (11) which faces the bearing element (9) is configured as a slide surface (19) and is provided with a recess (13) for receiving the spacer element (12).

10. The shut-off valve according to any one of the preceding claims, **characterized in that** a resetting element (14) is provided which acts on the stroke element (11) and effects a resetting of the stroke element (11) into its initial position.

11. The shut-off valve according to any one of the preceding claims, **characterized in that** the stroke element includes a carrier ring (11) which comprises at least one axial lateral surface area (16, 17) provided with optical identification features which mark the work position of the valve body (6).

12. The shut-off valve according to claim 11, **characterized in that** the actuating element is provided with a cap which laterally envelopes the carrier ring (11) and which in the area of the axial lateral surface area (16, 17) comprises at least one viewing window (18) having a height not exceeding that of the axial lateral surface area (16, 17).

13. The shut-off valve according to claim 11, **characterized in that** the actuating element comprises a cap (29) which laterally envelopes the carrier ring (21) and which in the open position of the valve body (6) releases the lateral surface area (26) marking the open position.

14. The shut-off valve according to any one of the preceding claims, **characterized in that** the display device for the work position of the valve body (6) is arranged such that it is visible with the viewing direction perpendicular to the rotation axis (15).

15. The shut-off valve according to any one of the preceding claims, **characterized in that** a friction clutch, a snap-over device or a predetermined breaking point is provided so that the valve body can be closed in the event of failure of the status display.

**EP 1 985 901 B1**

**Revendications**

1. Vanne d'arrêt avec affichage de statut, avec un élément d'actionnement rotatif autour d'un axe (15), élément par l'actionnement rotatif duquel un corps de vanne mobile (6) est mobile entre une position d'ouverture et une position de fermeture, et qui est connecté activement à un dispositif d'affichage (9, 11, 12, 16, 17, 18) pour l'affichage de la position de corps de vanne, **caractérisée en ce que** le dispositif d'affichage (9, 11, 12, 16, 17, 18) présente un élément de palier (9) et un élément de levage (11), l'élément de palier (9) et l'élément de levage (11) étant logés de sorte qu'ils sont coulissants de manière réversible l'un par rapport à l'autre le long de l'axe de rotation (15) et rotatifs l'un par rapport à l'autre autour de l'axe de rotation (15) et **en ce que** la connexion interactive entre l'élément d'actionnement et le dispositif d'affichage (9, 11, 12, 16, 17, 18) comprend un mécanisme qui permet d'effectuer une rotation relative de l'élément d'actionnement pour soulever le corps de vanne (6) une rotation relative de l'élément de palier (9) et de l'élément de levage (11) et un élément d'écartement mécanique (12) parvient entre l'élément de palier (9) et l'élément de levage (11) qui provoque une modification changeant l'affichage de statut de la distance entre l'élément de palier (9) et l'élément de levage (11) contre une force de rappel (14) agissant axialement et qui maintient la distance lors de la poursuite de la rotation de l'élément d'actionnement.

2. Vanne d'arrêt selon la revendication 1, **caractérisée en ce que** l'élément d'écartement (12) est associé à l'élément de palier (9) ou l'élément de levage (11) et **en ce qu'**elle parvient à une surface de glissement (19) annulaire par rotation de l'élément d'actionnement pour soulever le corps de vanne (6) sortant d'une cavité (13), surface sur laquelle il se déplace en continuant à tourner l'élément d'actionnement.

3. Vanne d'arrêt selon la revendication 2, **caractérisée en ce que** le mouvement de l'élément d'écartement (12) est un mouvement de glissement sur la surface de glissement (19).

4. Vanne d'arrêt selon la revendication 2 ou 3, **caractérisé en ce que** l'élément d'écartement (12) présente vu dans la direction de mouvement de rotation de l'élément d'actionnement (12) une surface de contact s'étendant de manière inclinée à l'axe de rotation (15) pour soulever le corps de vanne (6).

5. Vanne d'arrêt selon l'une des revendications 2 à 4, **caractérisée en ce que** qu'il est prévu au moins une bague de couverture (41, 51) reposant de manière rotative sur la surface de glissement (19), bague qui présente un évidement (42, 52) dans laquelle l'élément d'écartement (12) sortant de la cavité (13) agit comme un entraînement, la bague de recouvrement (41, 51) présentant en outre un tenon saillant (53, 53) qui vient en application selon un angle de rotation prédéterminé inférieur à 360 degrés contre une butée de sorte que la bague de recouvrement (41, 51) recouvre la cavité (13).

6. Vanne d'arrêt selon l'une des revendications précédentes, **caractérisée en ce que** l'élément de palier (9) est rotatif autour de l'axe de rotation (15) et fait partie de l'élément d'actionnement ou est relié de manière rotative à l'élément d'actionnement.

7. Vanne d'arrêt selon la revendication 1, **caractérisée en ce que** l'élément d'écartement (12) est prévu sur la face de l'élément de palier tournée vers l'élément de levage (11).

8. Vanne d'arrêt selon l'une des revendications précédentes, **caractérisé en ce que** l'élément de levage (11) est logé coulissant le long de l'axe de rotation (15) axialement et de manière réversible entre la position de sortie et une position de fin de course qui est définie par la distance prédéterminée.

9. Vanne d'arrêt selon l'une des revendications précédentes, **caractérisée en ce que** la face supérieure de l'élément de levage (11), tournée vers l'élément de palier (9) est réalisée comme une surface de glissement et est munie d'une cavité (13) pour le logement de l'élément d'écartement (12).

10. Vanne d'arrêt selon l'une des revendications précédentes, **caractérisée en ce qu'**il est prévu un élément de rappel (14) agissant sur l'élément de levage (11) qui provoque un rappel de l'élément de levage (11) dans sa position de sortie.

11. Vanne d'arrêt selon l'une des revendications précédentes, **caractérisée en ce que** l'élément de levage comporte une bague support (11) qui présente au moins une zone axiale de surface d'enveloppe (16, 17) qui est munie de caractéristiques optiques qui caractérisent la position de travail du corps de vanne (6).

**12.** Vanne d'arrêt selon la revendication 11, **caractérisée en ce que** l'élément d'actionnement est muni d'un bouchon entourant latéralement la bague support (11), bouchon qui présente dans la zone de la zone axiale de surface d'enveloppe (16, 17), au moins un hublot (18) dont la hauteur ne dépasse pas celle de la zone axiale de surface d'enveloppe (16, 17).

**13.** Vanne d'arrêt selon la revendication 11, **caractérisée en ce que** l'élément d'actionnement présente un bouchon (29) entourant latéralement la bague support (21), bouchon qui en position ouverte du corps de vanne (6) libère la zone de surface d'enveloppe (26) caractérisant la position ouverte.

**14.** Vanne d'arrêt selon l'une des revendications précédentes, **caractérisé en ce que** l'affichage pour la position de travail du corps de vanne (6) est disposé de sorte qu'il puisse être détectable avec le sens du regard transversalement à l'axe de rotation (15).

**15.** Vanne d'arrêt selon l'une des revendications précédentes, **caractérisée en ce qu'**il est prévu un accouplement à friction, un dispositif de sécurité d'encliquetage ou un point de rupture prédéterminé de sorte qu'en cas d'une défaillance de l'affichage de statut, le corps de vanne puisse être fermé.

Fig. 1a

Fig. 1b

Fig. 2a

Fig. 2b

**Fig. 3**

**Fig. 4**

## Fig. 5a

**Fig. 5b**

A              B             .C

## Fig. 6a

Fig. 6b

G                H                I

## Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4309753 A1